# EUROPEAN PATENT APPLICATION

(11) **EP 3 364 048 A1**
(43) Date of publication of application: **22.08.2018**
(21) Application number: 18157125.8
(22) Date of filing: 16.02.2018
(51) Int. Cl.: F15B 15/28, F15B 15/06, F16K 31/163, F16K 37/00

(54) **PNEUMATIC ACTUATOR WITH ROTARY SHAFT FOR VALVES, WITH POSITION DETECTION SYSTEM**

(30) Priority: 20.02.2017 IT 201700018345
(71) Applicant: Innotec - Tecnologie Innovative S.r.l., 37135 Verona (IT)
(72) Inventor: ZAVARISE, Luca, 37010 Costermano (VR) (IT); CARCERERI, Simone, 37042 Caldiero (VR) (IT); PIATELLI, Andrea Fabio, 37026 Pescantina - Località Ospedaletto (VR) (IT)
(74) Representative: Modiano, Micaela Nadia

(57) **Abstract**

A pneumatic actuator (1) with rotary shaft for valves, comprising a position detection system (6), an actuator body (2) adapted to accommodate a piston (3) which can move axially within the actuator body (2), the piston (3) being connected to a rotary shaft (4) adapted to actuate a valve, and further comprising at least one magnet (5) which is arranged at the outer surface of the piston (3), means for detecting the at least one magnet (5) being provided which are accommodated outside the actuator body and being provided with at least two sensors (7, 8) adapted to detect the magnetic field generated by the at least one magnet (5).

## Description

The present invention relates to a pneumatic actuator with rotary shaft for valves, with position detection system. More particularly, the invention relates to a pneumatic actuator with rotary shaft for valves with a system for position detection by means of a magnetic field sensor.

Even more particularly, the invention relates to a pneumatic actuator for rotary motion with position detection system that is suitable to move valves the opening/closure of which are obtained by means of a rotation of approximately 90° about their axis.

As is known, piston actuators for valves are currently commercially available which internally convert the internal movement of the piston into 90° rotations for opening/closure of the valve and provide for detection of the position of the actuator, which is read on a part that is integral with the piston or with the rotary part, which protrudes outside the structure of the actuator itself.

The aim of the present invention is to provide a pneumatic actuator with rotary shaft for valves in which the position of the piston of the actuator is detected by means of a magnetic field sensor.

Within this aim, an object of the present invention is to provide a pneumatic actuator with rotary shaft for valves in which the indication of the position reached by the actuator is visible both by means of the lighting of LEDs of different colors and by means of an appropriate electrical signal.

Another object of the present invention is to provide a pneumatic actuator with rotary shaft for valves in which the actuator with the corresponding position detection system is suitable for immersion.

A still further object of the present invention is to provide a pneumatic actuator with rotary shaft for valves that is highly reliable, relatively simple to provide and at competitive costs.

This aim and these and other objects which will become better apparent hereinafter, are achieved by a pneumatic actuator with rotary shaft for valves comprising a position detection system, an actuator body adapted to accommodate a piston which can move axially within said actuator body, said piston being connected to a rotary shaft adapted to actuate a valve, characterized in that it comprises at least one magnet which is arranged at the outer surface of said piston, means for detecting said at least one magnet being provided which are accommodated outside said actuator body and being provided with at least two sensors adapted to detect the magnetic field generated by said at least one magnet.

Further characteristics and advantages of the invention will become better apparent from the description of a preferred but not exclusive embodiment of the pneumatic actuator according to the present invention, illustrated by way of nonlimiting example in the accompanying drawings, wherein:
Figure 1 is a sectional view of the actuator according to the invention in the closure position;
Figure 2 is a sectional view of the actuator according to the invention in the open position;
Figure 3 is a sectional view of the actuator according to the invention in an intermediate position;
Figures 4a and 4b are respectively front and rear perspective views of the position detection system.

With reference to the figures, the pneumatic actuator with rotary shaft for valves according to the invention, designated generally by the reference numeral 1, comprises a body 2 of the actuator within which a piston 3 can move axially which is connected at one end to an actuation shaft 4 of a valve.

Conveniently, the body 3 of the piston is optionally provided with a magnet 5.

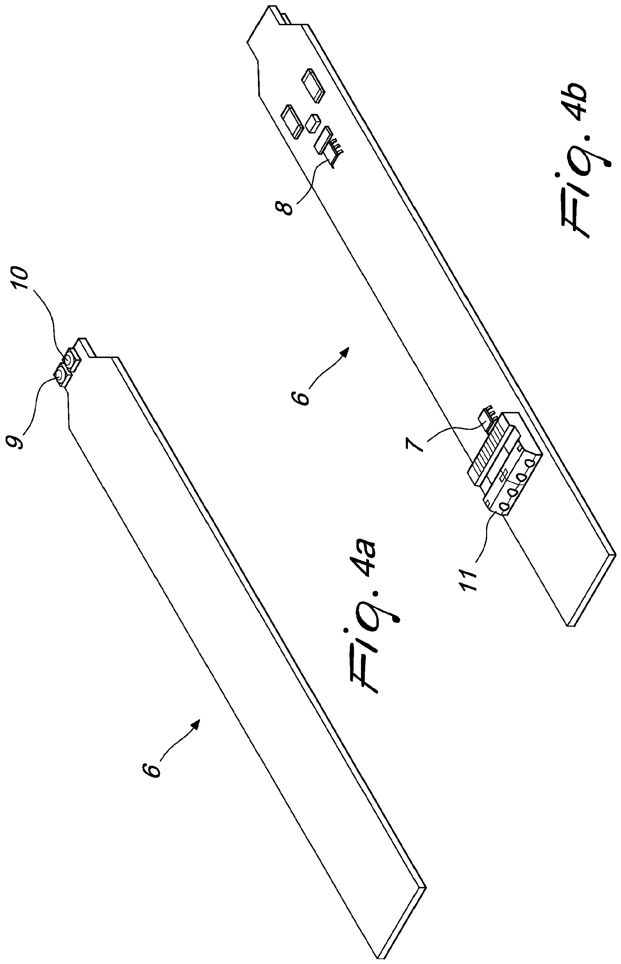

Furthermore, the invention provides for a system for detecting the position of the actuator, in the form of detection means 6 which are constituted for example by a plate-like element provided with at least two detection means, which are arranged so that they are spaced along the longitudinal extension of the plate-like element 6. The detection means are designated by the reference numerals 7 and 8 in Figure 4.

Conveniently, the plate-like element 6 is provided with a pair of LEDs 9 and 10 adapted to visualize the position of the actuator, as well as a terminal 11 to which a first cable and a second cable are connected which are adapted respectively to convey outside the position signals of the actuator, which as mentioned are also visualized by means of the pair of LEDs 9 and 10.

The plate-like element 6 is arranged so as to rest against the body 2 of the actuator, at its external wall, and the piston 3 slides in a position that is closely adjacent to the plate-like element 6.

The only moving part with respect to the body of the actuator is the shaft 4, and this therefore entails a reduction of the number of seals, which is indeed due to the smaller number of parts that face the outside of the body of the actuator.

Therefore, this entails a lower number of critical points linked to the seal itself and a lower loss of force due to frictions against the seals.

The sensors 7 and 8 of the plate-like element are parts of an electronic circuit that is completely covered with resin, thus obtaining a component that can be immersed in a liquid.

With reference to the figures, the operation of the actuator according to the invention is as follows.

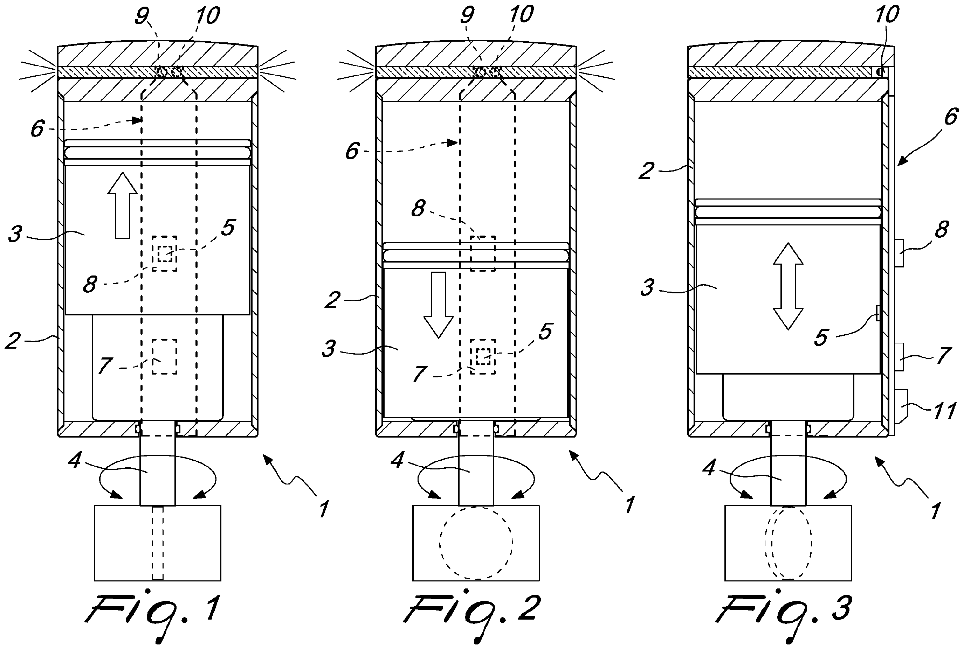

In Figure 1, the magnetic field generated by the internal magnet 5 that is integral with the piston 3 is detected by the sensor 8 of the detection means.

The electronic detection circuit connected to the internal transistor transfers the power supply voltage to the LED 10, turning it on, and simultaneously also to one of the two cables connected to the terminal 11 so as to carry the position signal outside in the form of a PNP signal.

In Figure 2, the magnetic field generated by the internal magnet 5 is detected by the sensor 7 of the detection means. The electronic detection circuit, in a manner similar to the preceding case, provides for transferring the power supply voltage to the LED 9, turning it on, and simultaneously also to the other one of the two cables connected to the terminal 11, thus allowing external adjustment in the form of a PNP signal.

In Figure 3, instead, the magnetic field generated by the internal magnet 5 is not detected by any one of the two sensors 7 and 8 of the detection means and the electronic detection circuit connected to the internal transistor therefore remains deenergized, the LEDs do not light up and therefore no voltage is transferred to the cables connected to the terminal 11.

In practice it has been found that the actuator according to the invention allows to have a precise and optimum detection of the position of the actuator, with a smaller number of seals with respect to solutions of the known type, and without any need or possibility for incorrect adjustment of the position of the sensors, since the detection means are sealed and arranged in an unambiguous manner on, or on the outside of, the body of the actuator.

Conveniently, the sensors used can be constituted for example by Hall effect sensors or equivalents, which allow to detect the field of the permanent magnet that is inserted in the internal movable part of the actuator itself.

The actuator thus conceived is susceptible of numerous modifications and variations, all of which are within the scope of the appended claims.

Furthermore, all the details may be replaced with other technically equivalent elements.

In practice, the materials used, as well as the contingent shapes and dimensions, may be any according to the requirements and the state of the art.

The disclosures in Italian Patent Application No. 102017000018345 (UA2017A001044) from which this application claims priority are incorporated herein by reference.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. A pneumatic actuator (1) with rotary shaft for valves, comprising a position detection system (6), an actuator body (2) adapted to accommodate a piston (3) which can move axially within said actuator body (2), said piston (3) being connected to a rotary shaft (4) adapted to actuate a valve, **characterized in that** it comprises at least one magnet (5) which is arranged at the outer surface of said piston, means for detecting said at least one magnet (5) being provided which are accommodated outside said actuator body (2) and being provided with at least two sensors (7, 8) adapted to detect the magnetic field generated by said at least one magnet (5).

2. The actuator according to claim 1, **characterized in that** said two sensors (7, 8) are Hall effect sensors or equivalents.

3. The actuator according to claim 1 or 2, **characterized in that** said detection means (6) comprise a plate-like element (6) on which said at least two sensors (7, 8) are arranged, said plate-like element (6) being arranged at the external wall of said actuator body (2).

4. The actuator according to one or more of the preceding claims, **characterized in that** said plate-like element (6) supports a pair of LEDs (9, 10) adapted to indicate the position of said actuator.

5. The actuator according to one or more of the preceding claims, **characterized in that** said plate-like element (6) supports an electronic circuit for the activation of said LEDs (9, 10) and a terminal in order to provide in output, by means of the respective cables, an actuator position signal.

6. The actuator according to one or more of the preceding claims, **characterized in that** the electronic circuit of said plate-like element (6) and said at least two sensors (7, 8) are resin-coated.

7. The actuator according to one or more of the preceding claims, **characterized in that** it is adapted to be immersed in a liquid.
